# EUROPEAN PATENT SPECIFICATION

(11) **EP 2 658 168 B1**
(45) Date of publication and mention of the grant of the patent: **09.09.2015**
(21) Application number: 11867631.1
(22) Date of filing: 15.06.2011
(51) Int. Cl.: H04L 12/715, H04L 12/701, H04L 12/717

(54) **METHOD, APPARATUS AND SYSTEM FOR ESTABLISHING MULTI-LAYER PATH**
VERFAHREN, VORRICHTUNG UND SYSTEM ZUR HERSTELLUNG MEHRSCHICHTIGER PFADE
PROCÉDÉ, APPAREIL ET SYSTÈME D'ÉTABLISSEMENT D'UN CHEMIN MULTICOUCHE

(43) Date of publication of application: 30.10.2013
(73) Proprietor: Huawei Technologies Co., Ltd., Longgang District Shenzhen, Guangdong 518129 (CN)
(72) Inventor: ZI, Xiaobing, Shenzhen Guangdong 518129 (CN); LIN, Yi, Shenzhen Guangdong 518129 (CN); HU, Ying, Shenzhen Guangdong 518129 (CN)
(74) Representative: Pfenning, Meinig & Partner GbR
(86) International application number: PCT/CN2011/075784
(87) International publication number: WO 2012/171191

(56) References cited:
- WO-A1-2010/097056
- CN-A- 101 753 427
- CN-A- 101 997 760
- US-A1- 2009 103 442
- US-A1- 2009 161 681
- US-A1- 2010 220 999
- MANNIE E ET AL: "Generalized Multi-Protocol Label Switching (GMPLS) Architecture; rfc3945.txt", 20041001, 1 October 2004 (2004-10-01), XP015009717, ISSN: 0000-0003
- E. OKI ET AL.: 'Framework for PCE-Based Inter-Layer MPLS and GMPLS Traffic Engineering.' IETF RFC5623. vol. 7, September 2009, pages 13 - 16, XP055108266
- HUANG LILI ET AL.: 'Research on PCE-based ASON Routing Technology.' STUDY ON OPTICAL COMMUNICATIONS. vol. 2009, no. 2, April 2009, pages 10 - 13, 18, XP008151581

## Description

### TECHNICAL FIELD

The present invention relates to the communications field, and in particular, to a method, an apparatus, and a system for establishing a multi-layer path.

### BACKGROUND

A transport network generally includes nodes and links. A transport network may include networks of different layers. For example, an upper-layer network may be a packet transport network composed of multi-protocol label switching (Multi-Protocol Label Switching, MPLS) nodes and links, and a lower-layer network may be a time division multiplex (Time Division Multiplex, TDM) transport network composed of synchronous digital hierarchy (Synchronous Digital Hierarchy, SDH) nodes and links. In this case, a TDM connection on the lower-layer SDH network provides a link for the upper-layer MPLS network, that is, the TDM connection on the lower-layer SDH network connects two nodes in the upper-layer MPLS network. Similarly, a network hierarchy may exist between an SDH network and a wavelength division multiplexing network. For example, the SDH network may be the upper-layer network, the wavelength division multiplexing network may be the lower-layer network, and the wavelength division multiplexing network may provide a link for two nodes in the SDH network, so that data transmitted over the SDH network may be transmitted over the wavelength division multiplexing network.

Generally, a network having a hierarchy may be called multi-layer network, of which the upper-layer network is called client layer network and the lower-layer network is called server layer network. A multi-layer path established between two nodes in the client layer network may include a link available on the client layer network and a link available on the server layer network, that is, a multi-layer path includes a client layer path on the client layer network and a server layer path on the server layer network.

Because a multi-layer network involves networks of multiple layers, path computation is complicated. Generally, a centralized path computation element may be deployed specially for path computation on the network.

On a multi-layer network, a path computation client (Path Computation Client, PCC) may obtain a multi-layer path from a path computation element (Path Computation Element, PCE) by using the path computation element communication protocol (Path Computation Element Communication Protocol, PCEP). In the process of obtaining a multi-layer path, the PCC sends a path computation request message to the PCE and receives a path computation response message from the PCE.

When the PCC extracts, from the path computation response message, a multi-layer path obtained through computation by the PCE, because the path computation response message does not specify a transmission type supported by the server layer path, such as a switching type or a signal type supported by the server layer path, the PCC does not know the switching type or the signal type to be used or suitable to be used in the establishment process of the server layer path. As a result, when establishing a network connection, the PCC randomly selects one among multiple known switching types or signal types supported by an ingress node of the server layer path, and establishes a network connection according to the randomly selected switching type or signal type.

However, the switching type or signal type randomly selected by the PCC may differ from the switching type or signal type for the multi-layer path obtained by the PCE. As a result, during establishment of the network connection by the PCC according to randomly selected switching type or signal type, a connection may fail to be established because the randomly selected switching type or signal type is different from the switching type or signal type supported by the server layer path in the multi-layer path. It is also possible that a connection is established despite the different switching types or signal types, but in this case the network resource utilization is reduced, and the optimal path obtained through computation by the PCE cannot be effectively utilized.

Document US Patent pub. no.US 2009/0161681 discloses that systems and methods for connections on an Automatically Switched Optical Network (ASON) network, including an ASON database and path computation algorithm, mechanisms for Ethernet connections over ASON, and mechanisms for label negotiation for SNCs. The document provides mechanisms for ASON path computation and virtual topology management, Ethernet connection establishment, modification, and deletion in ASON networks, and label negotiation without requiring binding and releasing of connections before label negotiation.

Document "Generalized Multi-Protocol Label Switching (GMPLS) Architecture "discloses that Section 7.1. is Overview: How to Request an LSP , Section 7.2. is Generalized Label Request, Section 7.3. is SONET/SDH Traffic Parameters and Section 7.4. is G.709 Traffic Parameters.

Document US Patent pub. no.US 2009/0103442 discloses a method for communicating risk information within a network including a plurality of domains connected to one another at the border nodes of said domains.

### SUMMARY

Embodiments of the present invention provides a method, a path computation client, a path computation element, and a system for establishing a multi-layer path, which are capable of solving the problem of establishment failure or resource utilization reduction due to PCC's random selection of a transmission type for establishing a multi-layer path, thereby enhancing the effectiveness of multi-layer path establishment.

In one aspect, a method for establishing a multi-layer path provided in an embodiment of the present invention includes: sending a path computation request message to a path computation element, where the path computation request message is used for requesting computation of a path from a source node to a target node, the source node and the target node being located in a client layer network; receiving a path computation response message returned by the path computation element, where the path computation response message carries information of a path traversing the client layer network and a server layer network from the source node to the target node, and a transmission type supported by a server layer path on the server layer network; and establishing a path, including the server layer path, from the source node to the target node according to the transmission type. The transmission type is carried in explicit route object ERO sub-objects comprised in the path computation response message. According to a sequence for parsing the ERO sub-objects by a path computation client, the transmission type is carried in an ERO sub-object adjacently behind the ERO sub-object carrying information of a border node, and the border node is located between the client layer network and the server layer network.

In another aspect, a method for establishing a multi-layer path provided in an embodiment of the present invention includes: receiving a path computation request message from a path computation client, where the path computation request message is used for requesting computation of a path from a source node to a target node, the source node and the target node being located in a client layer network; determining information of a path traversing the client layer network and a server layer network from the source node to the target node, and a transmission type supported by a server layer path on the server layer network; generating a path computation response message carrying the path information and the transmission type; and sending the path computation response message to the path computation client. The path computation response message is used by the path computation client to establish a path, comprising the server layer path, from the source node to the target node according to the transmission type. The generating a path computation response message carrying the path information and the transmission type comprises: carrying the transmission type in explicit route object ERO sub-objects comprised in the path computation response message. The carrying the transmission type in explicit route object ERO sub-objects comprised in the path computation response message comprises: according to a sequence for parsing the ERO sub-objects by the path computation client, carrying the transmission type in an ERO sub-object adjacently behind the ERO sub-object carrying information of a border node, wherein the border node is located between the client layer network and the server layer network.

In still another aspect, a path computation client provided in an embodiment of the present invention includes: a sending module, configured to send a path computation request message to a path computation element, where the path computation request message is used for requesting computation of a path from a source node to a target node, the source node and the target node being located in a client layer network; a receiving module, configured to receive a path computation response message returned by the path computation element, where the path computation response message carries information of a path traversing the client layer network and a server layer network from the source node to the target node, and a transmission type supported by a server layer path on the server layer network; and an establishing module, configured to establish a path, including the server layer path, from the source node to the target node according to the transmission type. The transmission type is carried in explicit route object ERO sub-objects comprised in the path computation response message. According to a sequence for parsing the ERO sub-objects by the path computation client, the transmission type is carried in an ERO sub-object adjacently behind the ERO sub-object carrying information of a border node, wherein the border node is located between the client layer network and the server layer network.

In still another aspect, a path computation element provided in an embodiment of the present invention includes: a receiving module, configured to receive a path computation request message from a path computation client, where the path computation request message is used for requesting computation of a path from a source node to a target node, the source node and the target node being located in a client layer network; a determining module, configured to determine information of a path traversing the client layer network and a server layer network from the source node to the target node, and a transmission type supported by a server layer path on the server layer network; a generating module, configured to generate a path computation response message carrying the path information and the transmission type; and a sending module, configured to send the path computation response message to the path computation client. The path computation response message is used by the path computation client to establish a path, comprising the server layer path, from the source node to the target node according to the transmission type.

The generating module is configured to carry the transmission type in explicit route object ERO sub-objects comprised in the path computation response message.

According to a sequence for parsing the ERO sub-objects by the path computation client, the transmission type is carried in an ERO sub-object adjacently behind the ERO sub-object carrying information of a border node, wherein the border node is located between the client layer network and the server layer network.

In still another aspect, a data structure of an explicit route object ERO provided in an embodiment of the present invention includes multiple ERO sub-objects. According to a sequence for parsing the ERO sub-objects by a path computation client, the multiple ERO sub-objects sequentially carry information of nodes on a path from a source node to a target node, the source node and the target node being located in a client layer network, and the path traversing the client layer network and a server layer network. A first ERO sub-object carries information of an ingress node of a server layer path on the server layer network, and a second ERO sub-object carries a transmission type supported by the server layer path, where the second ERO sub-object is placed adjacently behind the first ERO sub-object. A third ERO sub-object carries information of an egress node of the server layer path, and a fourth ERO sub-object carries a transmission type supported by the server layer path, where the fourth ERO sub-object is placed adjacently behind the third ERO sub-object.

Based on the above technical solutions, a transmission type supported by a server layer path is carried in a path computation response message, for informing a path computation client of the transmission type required for path establishment. This avoids establishment failure or resource utilization reduction due to path computation client's random selection of a transmission type for establishing a multi-layer path, and enables the path computation client to effectively utilize an optimal path obtained through computation by the path computation element, thereby enhancing the effectiveness of multi-layer path establishment.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons skilled in the art may still derive other drawings from these accompanying drawings without creative efforts.
FIG. 1 is a flowchart of a method for establishing a multi-layer path according to an embodiment of the present invention;
FIG. 2 is a schematic structural diagram of an example of a multi-layer network topology according to an embodiment of the present invention;
FIG. 3 is an example of an encapsulation format of an ERO sub-object carrying a transmission type according to an embodiment of the present invention;
FIG. 4 is an example of an encapsulation format of multiple ERO sub-objects carrying multi-layer path information and a transmission type according to an embodiment of the present invention;
FIG. 5 is a flowchart of another method for establishing a multi-layer path according to an embodiment of the present invention;
FIG. 6 is a flowchart of still another method for establishing a multi-layer path according to an embodiment of the present invention;
FIG. 7 is a structural block diagram of a path computation client according to an embodiment of the present invention;
FIG. 8 is a structural block diagram of another path computation client according to an embodiment of the present invention;
FIG. 9 is a structural block diagram of a path computation element according to an embodiment of the present invention; and
FIG. 10 is a structural block diagram of a system for establishing a multi-layer path according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons skilled in the art based on the embodiments of the present invention without creative efforts shall fall within the protection scope of the present invention.

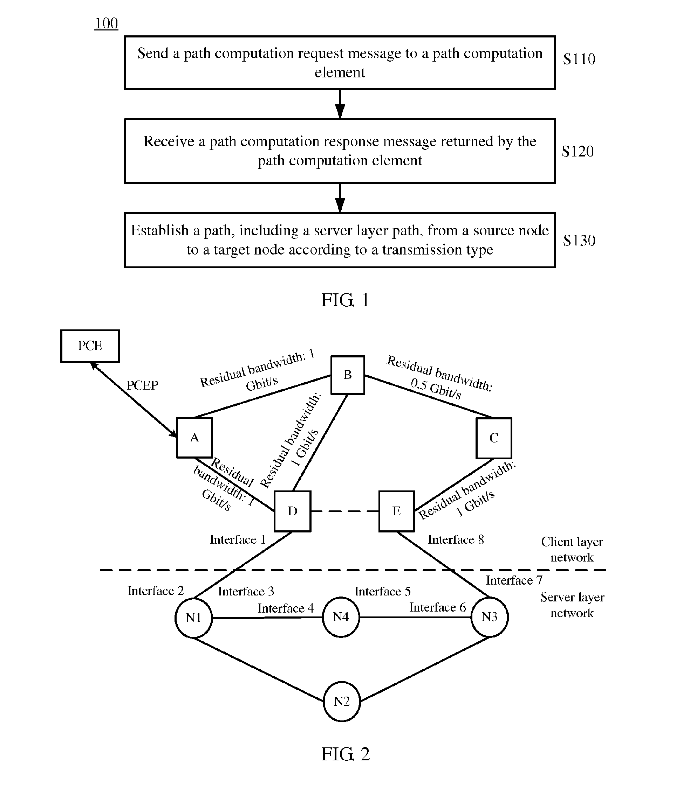

The following describes a method 100 for establishing a multi-layer path according to an embodiment of the present invention with reference to FIG. 1.

As shown in FIG. 1, the method 100 includes: in S110, sending a path computation request message to a path computation element, where the path computation request message is used for requesting computation of a path from a source node to a target node, the source node and the target node being located in a client layer network; in S 120, receiving a path computation response message returned by the path computation element, where the path computation response message carries information of a path traversing the client layer network and a server layer network from the source node to the target node, and a transmission type supported by a server layer path on the server layer network; and in S130, establishing a path, including the server layer path, from the source node to the target node according to the transmission type.

For example, the method 100 may be performed by a PCC. The PCC obtains a transmission type from the path computation element, and establishes a path according to the transmission type. This, compared with path establishment based on a randomly selected transmission type, may determine the transmission type used by a path obtained through computation by the PCE, thereby allowing better use of the optimal path obtained through computation by the PCE and enhancing the effectiveness of multi-layer path establishment. The following describes in detail S 110 to S 130 according to the embodiment of the present invention.

In S110, the PCC sends the path computation request message to the PCE, requesting for information of the path from the source node to the target node. The PCC may be a source node or a network management device used for path establishment. If the PCC is a network management device, the network management device may send signaling to nodes on the path from the source node to the target node to control path establishment after receiving the path information. The source node and the target node are nodes in the client layer network. The path between them may be directly established on the client layer network, or a multi-layer path, including the client layer path and the server layer path, may be established on the client layer network and the server layer network.

In S120, after receiving the path computation request message, the PCE computes the path from the source node to the target node for the PCC according to an existing path computation manner such as a constraint shortest path first (Constraint Shortest Path First, CSPF) algorithm, and returns the information of the path obtained through computation to the PCC by carrying the path information in the path computation response message.

When the path obtained through computation by the PCE is a multi-layer path including a client layer path and a server layer path, the path computation response message carries information of a path traversing the client layer network and the server layer network from the source node to the target node. Different from the path computation response message in the prior art, the path computation response message also carries the transmission type supported by the server layer path.

The transmission type refers to the type of data that can be processed by and carried over nodes and links in a server layer path. Data matching the transmission type may be transmitted smoothly over the server layer path.

For example, the transmission type may include a switching type. The switching type includes but is not limited to a packet switching type, a time division multiplexing switching type, and a wavelength division multiplexing switching type and the like. In the case of the packet switching type, client data is transported by using a packet format (such as Internet Protocol (Internet Protocol, IP) packet and MPLS packet). A link between two nodes (such as an Ethernet link) may be used to transport packet data, while a node (such as a router node or an MPLS switch node) may forward packet data. In the case of the time division multiplexing switching type, client data is transported in time division multiplexing mode. Bandwidth resources of a link between two nodes (such as a fiber link) are divided into different timeslots, and different timeslots transport different client data. A node (such as an SDH device) may perform timeslot switching. In the case of the wavelength division multiplexing switching type, client data is transported in wavelength division multiplexing mode. A link between two nodes (such as a fiber link) may bear multiple wavelengths, and different wavelengths transport different client data. A node may perform wavelength switching (such as a wavelength division device).

For example, the transmission type may include signal types. A signal type may represent a format of a specific signal that may be carried over a link, including but not limited to an optical channel data unit (Optical Channel Data Unit, ODU) 1 signal, an ODU2 signal, and an ODU3 signal. One switching type may include multiple signal types, for example, the ODU1, ODU2, and ODU3 signals belong to the time division multiplexing type.

For another example, the transmission type may include both switching types and signal types.

In this way, the path computation response message may carry a switching type, or a signal type, or both. By carrying the transmission type, such as a switching type and a signal type, the transmission type required for path establishment may be informed to the PCC.

According to an embodiment of the present invention, a transmission type may be carried in explicit route object (Explicit Route Object, ERO) sub-objects included in the path computation response message.

For example, the path computation response message may be encapsulated in a payload of a TCP packet by using the transmission control protocol (Transmission Control Protocol, TCP). The path computation response message includes a message header and multiple objects. When an Object-Class (Object-Class) field is 7 and an Object Type (OT, Object Type) field is 1, the object is an ERO, and the path information is carried in the ERO.

An ERO includes an object header of the ERO and an object body of the ERO. The object body of the ERO may further include at least one sub-object of the ERO (hereinafter referred to as ERO sub-object). ERO sub-objects carry information of nodes on a path. Each ERO sub-object carries information of one node. Therefore, when there are N (N is a natural number) nodes on a path, N ERO sub-objects are required to carry information of each node on the path. A node can be found by using the node information. For example, the node information may be an IP address or a number of a node. In the embodiment of the present invention, the transmission type may be carried in ERO sub-objects.

In an embodiment of the present invention, according to a sequence for parsing the ERO sub-objects by the PCC, an ERO sub-object carrying a transmission type is placed adjacently behind an ERO sub-object carrying information of a border node. The border node in this embodiment is located between the client layer network and the server layer network. The ERO sub-object carrying the transmission type is specifically described with reference to FIG. 2 to FIG. 4.

In S 130, when the PCC receives the transmission type from the PCE, the PCC controls the establishment of a server layer path based on the transmission type, thereby further establishing a path, including the server layer path, from the source node to the target node. It should be noted that the manner in which the PCC establishes the path belongs to the prior art, and the details are not described herein. Compared with the prior art, in the embodiment of the present invention, the transmission type required for establishing a server layer path is not a randomly selected transmission type, but a transmission type which is supported by the server layer path and returned by the PCE.

For example, when the PCC is a network management device, the network management device sends control signaling to nodes on the server layer path respectively according to the server layer path obtained through computation by the PCE and the transmission type supported by the server layer path, so as to configure the nodes according to the transmission type. That is, each node on the server layer path configures a forwarding rule according to the transmission type in the received control signaling, thereby establishing a server layer path. For example, for the packet switching type, the network management device configures a packet switching (such as MPLS protocol-based label switching) forwarding rule on each node included on the server layer path; for a specific ODU signal type, the network management device configures a cross connection for the specific ODU on each optical transmission network (Optical Transmission Network, OTN) node.

For another example, when the PCC is a source node, the source node sends a Path message carrying server layer path information and the transmission type to an ingress node of the server layer path according to the server layer path obtained through computation by the PCE and the transmission type supported by the server layer path. The ingress node finds that the ingress node itself is a first node on the server layer path specified by the Path message, and triggers the configuration on each node on the server layer path according to the transmission type, thereby establishing the server layer path. In this case, the server layer path is established based on the Path message from the PCC.

According to the method for establishing a multi-layer path provided in the embodiment of the present invention, the transmission type supported by the server layer path is carried in the path computation response message, for informing the PCC of the transmission type required for path establishment. This avoids establishment failure or resource utilization reduction due to PCC's random selection of a transmission type for establishing a multi-layer path, and enables the PCC to effectively utilize an optimal path obtained through computation by the PCE, thereby enhancing the effectiveness of multi-layer path establishment.

Specifically, in the prior art, because the PCC randomly selects a transmission type for establishing a multi-layer path, it is possible that the server layer path does not support the transmission type selected by the PCC, thereby causing path establishment failure. According to the method for establishing a multi-layer path provided in the embodiment of the present invention, because the PCC may obtain a transmission type supported by the server layer path from the PCE, the transmission type used by the PCC can be supported by the server layer path, and therefore, a path is established successfully. Besides, in the prior art, because the PCC randomly selects a transmission type for establishing a multi-layer path, it is possible that the server layer path supports the transmission type selected by the PCC, but the transmission type selected by the PCC is not an optimal transmission type which can be supported by the server layer path obtained through computation by the PCE, which reduces the resource utilization of the server layer path. According to the method for establishing a multi-layer path provided in the embodiment of the present invention, because the PCC may obtain a transmission type supported by the server layer path from the PCE, which is an optimal transmission type for a multi-layer path, the resource utilization of the server layer path can be increased when the server layer path is established by using the transmission type.

The following, with reference to an example of a multi-layer network topology shown in FIG. 2, describes two examples of a path establishment method. In FIG. 2, the part above the dotted line is a client layer network, namely upper-layer network, and the part below the dotted line is a server layer network, namely lower-layer network.

A first example is described. In the first example, assume that the client layer network is an MPLS packet network including nodes A, B, C, D, and E; the server layer network is an SDH network including nodes N1, N2, N3, and N4. On the SDH network, each node and each link support a TDM switching type and a packet switching type. On the client layer network, the residual bandwidth of each link is shown in the figure. In an initial state, there is no link between node D and node E on the client layer network.

When node A hopes to establish a 1 Gbit/s path between node A and node C, steps (1) to (4) may be performed:

(1) Node A sends a path computation request message to the PCE by using the PCEP protocol, requesting for information of a 1 Gbit/s path between node A and node C.

(2) The PCE obtains a multi-layer path A-D-N1-N4-N3-E-C through computation according to the network topology information obtained in advance, and determines that a server layer path D-N1-N4-N3-E needs to provide a connection by using the TDM switching type.

(3) The PCE returns the above path computation result to node A by using a path computation response message, and carries multi-layer path information and the TDM switching type supported by the server layer path in the path computation response message.

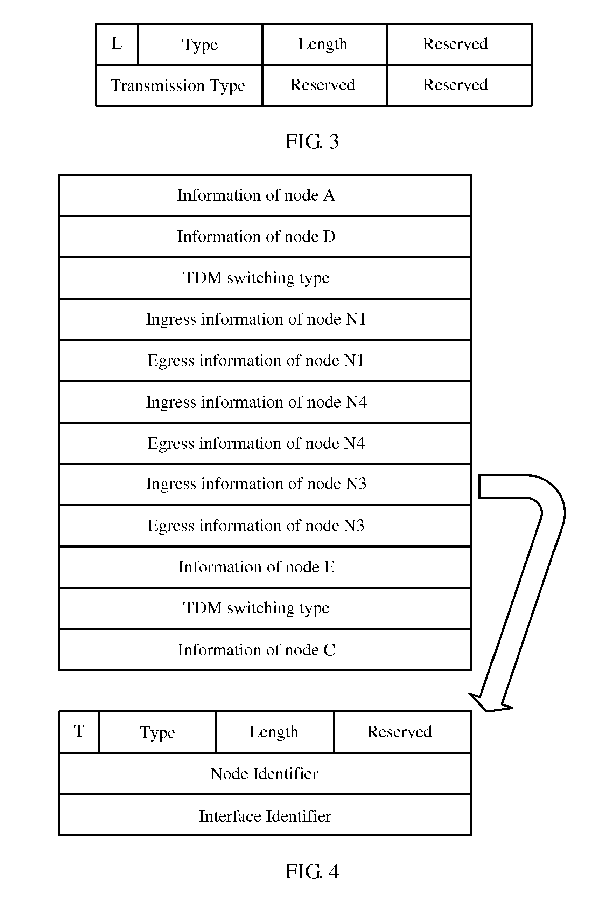

The transmission type supported by the server layer path may be carried in an ERO sub-object. The encapsulation format of an ERO sub-object carrying a transmission type is shown in FIG. 3. Although in FIG. 3, a transmission type is carried by using an ERO sub-object, persons skilled in the art may understand that it is feasible to carry a transmission type by using other data structures. In the first example, because the transmission type is specifically a switching type, the TDM switching type in the first example may be carried in a Transmission Type field in the encapsulation format shown in FIG. 3.

In FIG. 3, an L field, a Type (Type) field, and a Length (Length) field are standard headers in an ERO sub-object. When a transmission type is carried in an ERO sub-object, the L field, as a loose identifier, is not mandatory, that is, the ERO sub-object carrying a transmission type may include only the Type field and the Length field in the header. Besides, the data part of the ERO sub-object carrying a transmission type must include the Transmission Type field.

The Type field may be used to identify that a data structure carries transmission type information; the Length field may be used to indicate the number of bytes occupied by the data structure; and the Transmission Type field may be used to carry a transmission type supported by the server layer path.

In an ERO sub-object, different values of the Type field represent different sub-objects. Therefore, a unique label number of the Type field may be allocated to an ERO sub-object carrying a transmission type. For example, Type=100 indicates that the ERO sub-object is an ERO sub-object carrying a transmission type.

The Transmission Type field may carry a switching type, or a signal type, or both. In the first example, the Transmission Type field carries a transmission type, for example, 101 may be used to indicate a TDM switching type, 102 may be used to indicate a packet switching type, and 103 may be used to indicate a WDM (Wave Division Multiplex, wavelength division multiplex) switching type.

A Reserved (Reserved) field is optional and temporarily undefined. The ERO sub-object carrying a transmission type may not include the Reserved field. This field can be defined arbitrarily.

According to a sequence for parsing the ERO sub-objects by the PCC, the PCE may place an ERO sub-object carrying a TDM switching type adjacently behind the ERO sub-object carrying information of a border node D, and place another ERO sub-object carrying a TDM switching type adjacently behind the ERO sub-object carrying information of a border node E. By this means, it can be indicated in the path computation response message that node D and node E are specified as border nodes. By parsing the ERO sub-object, the PCC may determine that a node corresponding to previously parsed node information is a border node between the client layer network and the server layer network, that is, the PCC may determine that node D and node E are border nodes located between the MPLS packet network and the SDH network.

For the multi-layer path A-D-N1-N4-N3-E-C obtained through computation by the PCE, multi-layer path information may be carried in the path computation response message by using the encapsulation format shown in FIG. 4.

In FIG. 4, an ERO sub-object in the path computation response message may sequentially carry the following path information: information of node A, information of node D (such as interface 1), a TDM switching type, ingress information of node N1 (such as interface 2), egress information of node N1 (such as interface 3), ingress information of node N4 (such as interface 4), egress information of node N4 (such as interface 5), ingress information of node N3 (such as interface 6), egress information of node N3 (such as interface 7), information of node E (such as interface 8), a TDM switching type, and information of node C.

In the embodiment shown in FIG. 4, information of intermediate nodes N1, N4, and N3 of the server layer path is carried, which specifically includes the ingress and egress information of the intermediate nodes. In other embodiments, however, information of intermediate nodes N1, N4, and N3 of the server layer path may be not carried, or when information of intermediate nodes is carried, only ingress or egress information of intermediate nodes N1, N4, and N3 is carried.

The format of an ERO sub-object carrying node information may be the same as the format in the prior art. Description is made with an example of a format of the ERO sub-object carrying ingress information of node N3. A T field, a Type (Type) field, and a Length (Length) field form the header of the ERO sub-object. For example, if the Type field is 4 and the Length field is 12, it indicates that the ERO sub-object is an unnumbered interface identification sub-object. A Reserved (Reserved) field is 0. A Node Identifier field may carry a node identifier used for pointing to a corresponding node. For example, the node identifier may be an IP address or a number of the node, and the node may be a router or another network device. An Interface Identifier field may carry an interface identifier used for pointing to a corresponding interface. For example, the interface identifier may be an IP address or a number of the interface. For an ERO sub-object carrying N3 information, the node identifier may be an IP address or a number of node N3, and the interface identifier may be an IP address or a number of interface 6.

(4) After receiving a path computation response message returned by the PCE, because node A may know a TDM switching type supported by the server layer path D-N1-N4-N3-E, node A establishes a TDM connection for D-N1-N4-N3-E based on the TDM switching type. In this way, node A is capable of using an appropriate switching type to control the establishment of a server layer path, instead of randomly selecting a switching type. As a result, node A may better use the optimal path obtained through computation by the PCE.

The following describes the second example according to the example of the network topology shown in FIG. 2. The second example is different from the first example in that the transmission type supported by the server layer path is a signal type, not a switching type.

In the second example, assume that in the network topology shown in FIG. 2, the client layer network is an MPLS packet network, the server layer network is an OTN network, and links on the OTN network support multiple signal types such as ODU1, ODU2, and ODU3. The residual bandwidth of each link on the client layer network is still the same as that shown in FIG. 2. Node D and node E are respectively connected to the OTN network of the server layer network by using 10 Gbit/s Ethernet links. The 10 Gbit/s Ethernet links between node D and node E are not interconnected.

When node A hopes to establish a 1 Gbit/s path between node A and node C, steps (1) to (4) may be performed:
(1) Node A sends a path computation request message to the PCE by using the PCEP protocol, requesting for information of a 1 Gbit/s path between node A and node C.
(2) The PCE obtains a multi-layer path A-D-N1-N4-N3-E-C through computation according to the network topology information obtained in advance, and determines that a server layer path D-N1-N4-N3-E needs to provide a connection by using the ODU2 signal type.
(3) The PCE returns the above path computation result to node A by using the path computation response message, and carries multi-layer path information and the ODU2 signal type supported by the server layer path in the path computation response message.

A signal type may be carried by using an encapsulation format shown in FIG. 3. In this case, the signal type should be carried in the Transmission Type field shown in FIG. 3. For example, different values may be defined to differentiate signal types. For example, values 1, 2, and 3 may be defined to indicate ODU1, ODU2, and ODU3, respectively.

According to a sequence for parsing the ERO sub-objects by the PCC, the PCE may place an ERO sub-object carrying an ODU2 signal type adjacently behind the ERO sub-object carrying information of a border node D, and place another ERO sub-object carrying an ODU2 signal type adjacently behind the ERO sub-object carrying information of a border node E. By this means, it can be indicated in the path computation response message that node D and node E are specified as border nodes. By parsing the ERO sub-object carrying an ODU2 signal switching type, the PCC may determine that a node corresponding to previously parsed node information is a border node between the client layer network and the server layer network, that is, the PCC may determine that node D and node E are border nodes located between the MPLS packet network and the OTN network.

For example, multi-layer path information and a signal type may be carried by using an encapsulation format shown in FIG. 4. In this case, the TDM switching type information shown in FIG. 4 should be replaced with ODU2 signal type information, to reflect multiple ERO sub-objects carried in the path computation response message shown in the second example. In the second example, an ERO sub-object in the path computation response message may sequentially carry the following path information: information of node A, information of node D (such as interface 1), an ODU2 signal type, ingress information of node N1 (such as interface 2), egress information of node N1 (such as interface 3), ingress information of node N4 (such as interface 4), egress information of node N4 (such as interface 5), ingress information of node N3 (such as interface 6), egress information of node N3 (such as interface 7), information of node E (such as interface 8), an ODU2 signal type, and information of node C.

(4) After receiving a path computation response message returned by the PCE, because node A may know the ODU2 signal type supported by the server layer path D-N1-N4-N3-E, node A establishes a connection for ODU2 signal transmission for D-N1-N4-N3-E based on the ODU2 signal type. In this way, node A is capable of using an appropriate signal type to control the establishment of a server layer path, instead of randomly selecting a signal type. As a result, node A may better use the optimal path obtained through computation by the PCE.

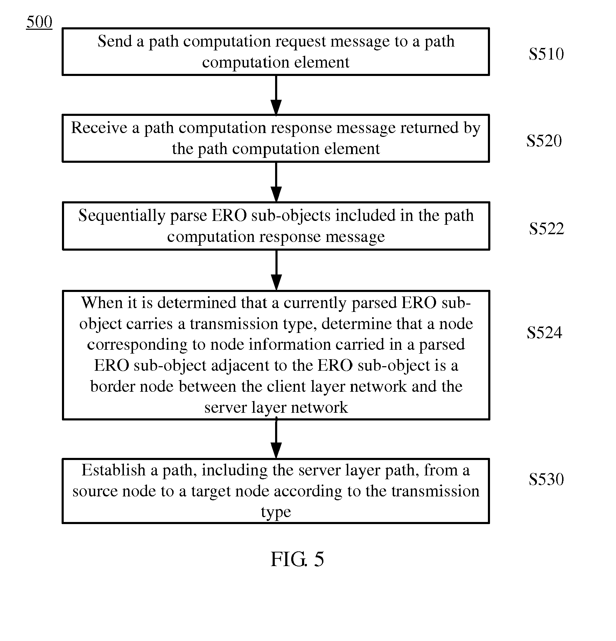

FIG. 5 is a flowchart of a method 500 for establishing a multi-layer path according to an embodiment of the present invention. S510, S520, and S530 in the method 500 are the same as S110, S120, and S130 in the method 100.

In S522, sequentially parse ERO sub-objects included in the path computation response message.

After receiving the path computation response message, the PCC sequentially parses ERO sub-objects to obtain the multi-layer path information and the transmission type supported by the server layer path.

The following description is based on the first example shown in FIG. 2 to FIG. 4. After receiving the path computation response message returned by the PCE, node A sequentially parses ERO sub-objects and obtains the ERO sub-objects shown in FIG. 4.

In S524, when it is determined that a currently parsed ERO sub-object carries a transmission type, determine that a node corresponding to node information carried in a parsed ERO sub-object adjacent to the ERO sub-object is a border node between the client layer network and the server layer network, where the border node includes an ingress node and an egress node of the server layer path.

According to a sequence for parsing the ERO sub-objects by the PCC, if the currently parsed ERO sub-object carries a transmission type, and no ERO sub-object carrying a transmission type has been parsed out before this ERO sub-object is parsed, it is determined that a parsed ERO sub-object adjacent to this ERO sub-object carries information of the ingress node of the server layer path, therefore the ingress node of the server layer path can be determined. The ingress node of the server layer path is a border node between the client layer network and the server layer network. If an ERO sub-object carrying a transmission type has been parsed out before this ERO sub-object is parsed, it is determined that a parsed ERO sub-object adjacent to this ERO sub-object carries information of the egress node of the server layer path, therefore the egress node of the server layer path can be determined. The egress node of the server layer path is a border node between the client layer network and the server layer network.

The following description is still based on the first example shown in FIG. 2 to FIG. 4. When a first ERO sub-object carrying a TDM switching type is parsed, if no TDM switching type has been parsed out before, it is determined that a parsed ERO sub-object adjacent to the first ERO sub-object carrying the TDM switching type carries information of the ingress node of the server layer path, that is, it is determined that node D is the ingress node of the server layer path. When a second ERO sub-object carrying a TDM switching type is parsed, if a TDM switching type has been parsed out before, it is determined that a parsed ERO sub-object adjacent to the second ERO sub-object carrying the TDM switching type carries information of the egress node of the server layer path, that is, it is determined that node E is the egress node of the server layer path.

After the ingress node and the egress node of the server layer path are determined, if the two nodes are border nodes in the client layer network and the server layer network, nodes between them are intermediate nodes of the server layer path (such as nodes N1, N4, and N3 shown in FIG. 2). Besides, when the ingress node and the egress node of the server layer path are determined, whether node information carried in an ERO sub-object is node information on the client layer network may be further determined. For example, when the currently parsed ERO sub-object does not carry a transmission type, if no ERO sub-object carrying a transmission type has been parsed out before, a parsed ERO sub-object adjacent to the currently parsed ERO sub-object is a node on the client layer network.

According to a sequence for parsing the ERO sub-objects by the PCC, the ERO sub-object carrying a transmission type is placed adjacently behind an ERO sub-object carrying information of a border node, so that the PCC can easily determine the ingress node and the egress node of the server layer path. Compared with the prior art in which the PCC needs to compare the known network topology information to determine the ingress node and the egress node of the server layer path, this manner determines the server layer path more easily and quickly, reduces the complexity of determining the ingress node and the egress node of the server layer path, and may be easily implemented. Therefore, the embodiment of the present invention not only enables the PCC to determine a transmission type supported by a server layer path, but also helps the PCC determine the ingress node and the egress node of the server layer path, thereby improving utilization of the ERO sub-object carrying the transmission type, and helping the PCC obtain more useful information through transfer of limited information.

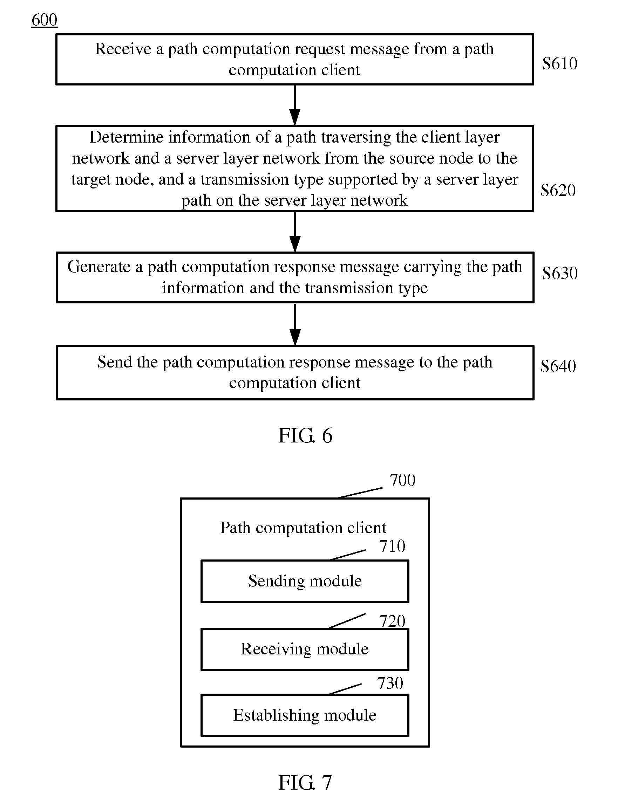

The following describes a method 600 for establishing a multi-layer path according to an embodiment of the present invention with reference to FIG. 6.

As shown in FIG. 6, the method 600 includes: in S610, receiving a path computation request message from a path computation client, where the path computation request message is used for requesting computation of a path from a source node to a target node, the source node and the target node being located in a client layer network; in S620, determining information of a path traversing the client layer network and a server layer network from the source node to the target node, and a transmission type supported by a server layer path on the server layer network; in S630, generating a path computation response message carrying the path information and the transmission type; and in S640, sending the path computation response message to the path computation client, so that the path computation client establishes a path, including the server layer path, from the source node to the target node according to the transmission type.

For example, the method 600 may be performed by a path computation element. According to the path computation request message sent by the path computation client such as a source node or a network management device, the path computation element may obtain a path from the source node to the target node using a path computation manner such as a CSPF algorithm. When the path obtained through computation is a multi-layer path, the path computation element needs to carry the multi-layer path information, and more importantly, a transmission type in the path computation response message, so that the path computation client establishes a multi-layer path according to the determined transmission type. Obviously, the path computation client does not need to select a transmission type randomly to establish a multi-layer path, thereby avoiding path establishment failure or ineffective resource utilization. Instead, the path computation client can effectively use the optimal path obtained through computation by the path computation element according to an appropriate transmission type, thereby enhancing the effectiveness of multi-layer path establishment.

Because the operations of the path computation element correspond to the operations of the path computation client, persons skilled in the art can know the operations of the path computation element with reference to the description of the method 100. To avoid repetition, they are not detailed here any further.

In S620, according to the bandwidth supported by each link on the client layer network and the server layer network, traffic required for establishing a path requested by the PCC, and network topology information, the PCE may use a path computation manner such as the CSPF algorithm to determine that the multi-layer path from the source node to the target node needs to traverse the server layer path on the server layer network. Because the PCE may collect network topology information, the PCE may know a transmission type supported by nodes and links on the network and the like, thereby knowing the transmission type supported by the server layer path.

According to an embodiment of the present invention, the transmission type may include at least one of a switching type and a signal type. For details, reference may be made to description of S120 in the method 100.

In S630, the PCE carries the multi-layer path information, and more importantly, a transmission type in the path computation response message to tell the PCC the transmission type.

According to an embodiment of the present invention, the transmission type may be carried in ERO sub-objects included in a path computation response message in the process of generating the path computation response message. For details, reference may be made to description of S120 in the method 100 with reference to the encapsulation mode of a carried transmission type (shown in FIG. 3) described in an example of a network topology shown in FIG. 2.

A transmission type may be carried in ERO sub-objects in different positions by using different manners. In an embodiment of the present invention, according to a sequence for parsing the ERO sub-objects by the PCC, an ERO sub-object carrying a transmission type is placed adjacently behind an ERO sub-object carrying information of a border node. The border node in this embodiment is located between the client layer network and the server layer network. For details, reference may be made to the encapsulation mode (shown in FIG. 4) of ERO sub-objects included in the path computation response message described in an example of a network topology shown in FIG. 2.

According to a sequence for parsing the ERO sub-objects by the PCC, the ERO sub-object carrying a transmission type is placed adjacently behind an ERO sub-object carrying information of a border node, so that the PCC can easily determine the ingress node and the egress node of the server layer path. Compared with the prior art in which the PCC needs to compare the known network topology information to determine the ingress node and the egress node of the server layer path, this manner determines the server layer path more easily and quickly, reduces the complexity of determining the ingress node and the egress node of the server layer path, and may be easily implemented. Therefore, the embodiment of the present invention not only enables the PCC to determine a transmission type supported by a server layer path, but also helps the PCC determine the ingress node and the egress node of the server layer path, thereby improving utilization of the ERO sub-object carrying the transmission type, and helping the PCC obtain more useful information through transfer of limited information.

The method for establishing a multi-layer path according to an embodiment of the present invention is detailed above. The following describes a structural block diagram of an apparatus for establishing a multi-layer path according to an embodiment of the present invention with reference to FIG. 7 to FIG. 9.

FIG. 7 is a structural block diagram of a path computation client 700 according to an embodiment of the present invention.

The path computation client 700 includes a sending module 710, a receiving module 720, and an establishing module 730. The sending module 710 is configured to send a path computation request message to a path computation element, where the path computation request message is used for requesting computation of a path from a source node to a target node, the source node and the target node being located in a client layer network. The receiving module 720 is configured to receive a path computation response message returned by the path computation element, where the path computation response message carries information of a path traversing the client layer network and a server layer network from the source node to the target node, and a transmission type supported by a server layer path on the server layer network. The establishing module 730 is configured to establish a path, including the server layer path, from the source node to the target node according to the transmission type.

For the above and other operations and/or functions of the sending module 710, the receiving module 720, and the establishing module 730, reference may be made to S110 to S 130 in the method 100. In addition, further reference may be made to examples described in FIG. 2 to FIG. 4 for better understanding. To avoid repetition, they are not detailed here any further.

The path computation client provided in an embodiment of the present invention may obtain a transmission type supported by the server layer path from the path computation response message received from the PCE, and establish a multi-layer path according to the transmission type, thereby avoiding establishment failure or resource utilization reduction due to the path computation client's random selection of a transmission type for establishing a multi-layer path, enabling the path computation client to effectively use the optimal path obtained through computation by the PCE, and enhancing the effectiveness of multi-layer path establishment.

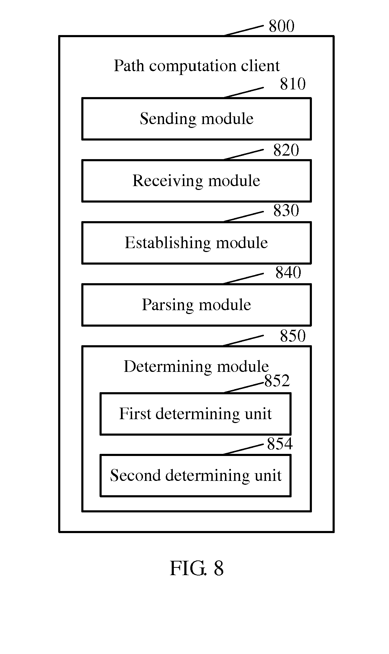

FIG. 8 is a structural block diagram of a path computation client 800 according to an embodiment of the present invention.

A sending module 810, a receiving module 820, and an establishing module 830 of the path computation client 800 are similar to the sending module 710, the receiving module 720, and the establishing module 730 of the path computation client 700.

According to an embodiment of the present invention, the transmission type includes at least one of a switching type and a signal type.

According to an embodiment of the present invention, a transmission type may be carried in ERO sub-objects included in a path computation response message.

Further, according to a sequence for parsing the ERO sub-objects by the path computation client 800, an ERO sub-object carrying a transmission type is placed adjacently behind an ERO sub-object carrying information of a border node. The border node in this embodiment is located between the client layer network and the server layer network. In this case, the path computation client 800 may further include a parsing module 840 and a determining module 850. The parsing module 840 is configured to sequentially parse ERO sub-objects included in the path computation response message after the receiving module 820 receives the path computation response message. The determining module 850 is configured to determine that a first parsed ERO sub-object carries the transmission type, and determine that a node corresponding to node information carried in a second parsed ERO sub-object adjacent to the first ERO sub-object is a border node between the client layer network and the server layer network, where the border node includes an ingress node and an egress node of the server layer path.

According to an embodiment of the present invention, the determining module 850 may include a first determining unit 852 and a second determining unit 854. The first determining unit 852 is configured to determine, if no ERO sub-object carrying a transmission type has been parsed out before the first ERO sub-object is parsed, that a second parsed ERO sub-object adjacent to the first ERO sub-object carries information of the ingress node of the server layer path. The second determining unit 854 is configured to determine, if an ERO sub-object carrying a transmission type has been parsed out before the first ERO sub-object is parsed, that a second parsed ERO sub-object adjacent to the first ERO sub-object carries information of the egress node of the server layer path.

For the related description of the transmission type and the above and other operations and/or functions of the parsing module 840, the determining module 850, the first determining unit 852, and the second determining unit 854, reference may be made to S120 in the method 100 and S522 and S524 in the method 500. In addition, further reference may be made to examples described in FIG. 2 to FIG. 4 for better understanding. To avoid repetition, they are not detailed here any further.

According to a sequence for parsing the ERO sub-objects by the path computation client, the ERO sub-object carrying a transmission type is placed adjacently behind an ERO sub-object carrying information of a border node, so that the path computation client provided in the embodiment of the present invention can easily determine the ingress node and the egress node of the server layer path. Compared with the prior art in which the path computation client needs to compare the known network topology information to determine the ingress node and the egress node of the server layer path, this manner determines the server layer path more easily and quickly, reduces the complexity of determining the ingress node and the egress node of the server layer path, and may be easily implemented. Therefore, the embodiment of the present invention not only enables the path computation client to determine a transmission type supported by a server layer path, but also helps the path computation client to determine the ingress node and the egress node of the server layer path, thereby improving utilization of the ERO sub-object carrying the transmission type, and helping the PCC obtain more useful information through transfer of limited information.

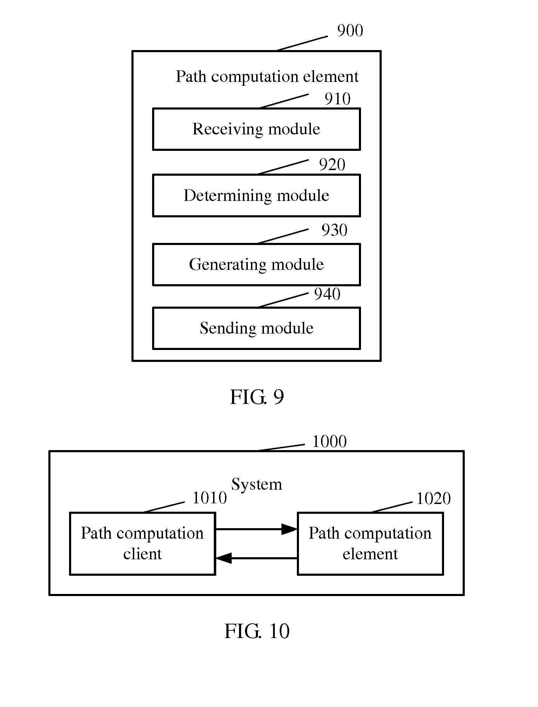

FIG. 9 is a structural block diagram of a path computation element 900 according to an embodiment of the present invention.

The path computation element 900 includes a receiving module 910, a determining module 920, a generating module 930, and a sending module 940. The receiving module 910 is configured to receive a path computation request message from a path computation client, where the path computation request message is used for requesting computation of a path from a source node to a target node, the source node and the target node being located in a client layer network. The determining module 920 is configured to determine information of a path traversing the client layer network and a server layer network from the source node to the target node, and a transmission type supported by a server layer path on the server layer network. The generating module 930 is configured to generate a path computation response message carrying the path information and the transmission type. The sending module 940 is configured to send the path computation response message to the path computation client, so that the path computation client establishes a path, including the server layer path, from the source node to the target node according to the transmission type.

For the above and other operations and/or functions of the receiving module 910, the determining module 920, the generating module 930, and the sending module 940, reference may be made to S610 to S630 in the method 600. To avoid repetition, they are not detailed here any further.

By carrying a transmission type in a path computation response message, the path computation element provided in an embodiment of the present invention may inform the path computation client of the transmission type supported by the server layer path, so that the path computation client establishes a multi-layer path according to the transmission type. In this way, the path computation client does not need to randomly select a transmission type for establishing a multi-layer path, thereby avoiding path establishment failure or ineffective resource utilization, enabling the path computation client to effectively use the optimal path obtained through computation by the path computation element according to an appropriate transmission type, and enhancing the effectiveness of multi-layer path establishment.

According to an embodiment of the present invention, the transmission type may include at least one of a switching type and a signal type.

According to an embodiment of the present invention, the generating module 930 is configured to carry a transmission type in ERO sub-objects included in the path computation response message.

Further, the generating module 930 is configured to place, according to a sequence for parsing the ERO sub-objects by the path computation client, an ERO sub-object carrying a transmission type adjacently behind the ERO sub-object carrying information of a border node, where the border node is located between the client layer network and the server layer network, and includes an ingress node and an egress node of the server layer path on the server layer network.

For related content of the transmission type and the above and other operations and/or functions of the generating module 930, reference may be made to S110 in the method 100 and S630 in the method 600. In addition, further reference may be made to examples described in FIG. 2 to FIG. 4 for better understanding. To avoid repetition, they are not detailed here any further.

According to a sequence for parsing the ERO sub-objects by the PCC, the path computation element provided in the embodiment of the present invention places the ERO sub-object carrying a transmission type adjacently behind an ERO sub-object carrying information of a border node, so that the PCC can easily determine the ingress node and the egress node of the server layer path. Compared with the prior art in which the PCC needs to compare the known network topology information to determine the ingress node and the egress node of the server layer path, this manner determines the server layer path more easily and quickly, reduces the complexity of determining the ingress node and the egress node of the server layer path, and may be easily implemented. Therefore, the embodiment of the present invention not only enables the path computation client to determine a transmission type supported by a server layer path, but also helps the PCC determine the ingress node and the egress node of the server layer path, thereby improving utilization of the ERO sub-object carrying the transmission type, and helping the PCC obtain more useful information through transfer of limited information.

FIG. 10 is a structural block diagram of a system 1000 for establishing a multi-layer path according to an embodiment of the present invention.

The system 1000 includes a path computation client 1010 and a path computation element 1020.

The path computation client 1010 is configured to: send a path computation request message to the path computation element 1020, where the path computation request message is used for requesting computation of a path from a source node to a target node, the source node and the target node being located in a client layer network; receive a path computation response message returned by the path computation element 1020, where the path computation response message carries information of a path traversing the client layer network and a server layer network from the source node to the target node, and a transmission type supported by a server layer path on the server layer network; and establish a path, including the server layer path, from the source node to the target node according to the transmission type.

The path computation element 1020 is configured to: receive a path computation request message from the path computation client 1010; determine the path information and the transmission type; generate a path computation response message carrying the path information and the transmission type; and send the path computation response message to the path computation client 1010.

For the above and other operations and/or functions of the path computation client 1010, reference may be made to specific descriptions of the method 100 and the method 500. For the above and other operations and/or functions of the path computation element 1020, reference may be made to specific descriptions of the method 600. In addition, further reference may be made to examples described in FIG. 2 to FIG. 4 for better understanding. To avoid repetition, they are not detailed here any further.

According to the system for establishing a multi-layer path provided in the embodiment of the present invention, the path computation element informs the path computation client of a transmission type supported by the server layer path, so that the path computation client may establish a multi-layer path according to the transmission type. This avoids establishment failure or resource utilization reduction due to path computation client's random selection of a transmission type for establishing a multi-layer path, and enables the path computation client to effectively utilize the optimal path obtained through computation by the path computation element, thereby enhancing the effectiveness of multi-layer path establishment.

Persons skilled in the art may be aware that, in combination with the methods described in the embodiments disclosed in this specification, the steps and units can be implemented by electronic hardware, computer software, or a combination thereof. To clearly describe the interchangeability between the hardware and the software, the foregoing has generally described compositions and steps of each embodiment according to functions. Whether the functions are performed by hardware or software depends on particular applications and design constraint conditions of the technical solutions. Persons skilled in the art may use different methods to implement the described functions for each particular application, but it should not be considered that the implementation goes beyond the scope of the present invention.

In combination with the methods described in the embodiments disclosed in this specification, the steps may be implemented by hardware, a software program performed by a processor, or a combination thereof. The software program may be stored in a random access memory (RAM), a memory, a read-only memory (ROM), an electrically programmable ROM, an electrically erasable programmable ROM, a register, a hard disk, a removable magnetic disk, or a CD-ROM, or any other types of storage media commonly known in the art.

Although some embodiments of the present invention are shown and described, persons skilled in the art should understand that, various modifications may be made to these embodiments without departing from the principle of the present invention, and such modifications shall fall within the scope of the present invention.

## Claims

1. A method for establishing a multi-layer path, comprising:
sending a path computation request message to a path computation element, wherein the path computation request message is used for requesting computation of a path from a source node to a target node, the source node and the target node being located in a client layer network (S110, S510);
receiving a path computation response message returned by the path computation element, wherein the path computation response message carries information of a path traversing the client layer network and a server layer network from the source node to the target node, and a transmission type supported by a server layer path on the server layer network (S120, S520);
establishing a path, comprising the server layer path, from the source node to the target node according to the transmission type (S 130 , S530);
wherein the transmission type is carried in explicit route object ERO sub-objects comprised in the path computation response message;
wherein the method is **characterized by**:
according to a sequence for parsing the ERO sub-objects by a path computation client, the transmission type is carried in an ERO sub-object adjacently behind the ERO sub-object carrying information of a border node, and the border node is located between the client layer network and the server layer network (S524).

2. The method according to claim 1, wherein after the receiving a path computation response message returned by the path computation element, the method further comprises:
sequentially parsing the ERO sub-objects comprised in the path computation response message( S522); and
if a first parsed ERO sub-object carries the transmission type, determining that a node corresponding to node information carried in a second parsed ERO sub-object adjacent to the first ERO sub-object is a border node between the client layer network and the server layer network, wherein the border node comprises an ingress node and an egress node of the server layer path.

3. The method according to claim 2, wherein the determining that a node corresponding to node information carried in a second parsed ERO sub-object adjacent to the first ERO sub-object is a border node between the client layer network and the server layer network comprises:
if no ERO sub-object carrying the transmission type has been parsed out before the first ERO sub-object is parsed, determining that the second ERO sub-object carries information of the ingress node of the server layer path; and
if an ERO sub-object carrying the transmission type has been parsed out before the first ERO sub-object is parsed, determining that the second ERO sub-object carries information of the egress node of the server layer path.

4. A method for establishing a multi-layer path, comprising:
receiving a path computation request message from a path computation client, wherein the path computation request message is used for requesting computation of a path from a source node to a target node, the source node and the target node being located in a client layer network S610);
determining information of a path traversing the client layer network and a server layer network from the source node to the target node, and a transmission type supported by a server layer path on the server layer network ( S620);
generating a path computation response message carrying the path information and the transmission type ( S630);
sending the path computation response message to the path computation client ( S640); wherein the path computation response message is used by the path computation client to establish a path, comprising the server layer path, from the source node to the target node according to the transmission type;
wherein the generating a path computation response message carrying the path information and the transmission type comprises:
carrying the transmission type in explicit route object ERO sub-objects comprised in the path computation response message;
wherein the method is **characterized by**:
the carrying the transmission type in explicit route object ERO sub-objects comprised in the path computation response message comprises:
according to a sequence for parsing the ERO sub-objects by the path computation client, carrying the transmission type in an ERO sub-object adjacently behind the ERO sub-object carrying information of a border node, wherein the border node is located between the client layer network and the server layer network.

5. A path computation client (700), comprising:
a sending module (710), configured to send a path computation request message to a path computation element, wherein the path computation request message is used for requesting computation of a path from a source node to a target node, the source node and the target node being located in a client layer network;
a receiving module (720), configured to receive a path computation response message returned by the path computation element, wherein the path computation response message carries information of a path traversing the client layer network and a server layer network from the source node to the target node, and a transmission type supported by a server layer path on the server layer network;
an establishing module (730), configured to establish a path, comprising the server layer path, from the source node to the target node according to the transmission type;
wherein the transmission type is carried in explicit route object ERO sub-objects comprised in the path computation response message; **characterized by**:
wherein according to a sequence for parsing the ERO sub-objects by the path computation client, the transmission type is carried in an ERO sub-object adjacently behind the ERO sub-object carrying information of a border node, wherein the border node is located between the client layer network and the server layer network.

6. A path computation element (900), comprising:
a receiving module (910), configured to receive a path computation request message from a path computation client, wherein the path computation request message is used for requesting computation of a path from a source node to a target node, the source node and the target node being located in a client layer network;
a determining module (920), configured to determine information of a path traversing the client layer network and a server layer network from the source node to the target node, and a transmission type supported by a server layer path on the server layer network;
a generating module (930), configured to generate a path computation response message carrying the path information and the transmission type;
a sending module (940), configured to send the path computation response message to the path computation client, wherein the path computation response message is used by the path computation client to establish a path, comprising the server layer path, from the source node to the target node according to the transmission type;
wherein the generating module is configured to carry the transmission type in explicit route object ERO sub-objects comprised in the path computation response message; **characterized by:**
w herein according to a sequence for parsing the ERO sub-objects by the path computation client, the transmission type is carried in an ERO sub-object adjacently behind the ERO sub-object carrying information of a border node, wherein the border node is located between the client layer network and the server layer network.

7. A data structure of an explicit route object ERO, comprising multiple ERO sub-objects, wherein according to a sequence for parsing the ERO sub-objects by a path computation client, the multiple ERO sub-objects sequentially carry information of nodes on a path from a source node to a target node, the source node and the target node being located in a client layer network, and the path traversing the client layer network and a server layer network, wherein:
a first ERO sub-object carries information of an ingress node of a server layer path on the server layer network, and a second ERO sub-object carries a transmission type supported by the server layer path, wherein the second ERO sub-object is placed adjacently behind the first ERO sub-object; and
a third ERO sub-object carries information of an egress node of the server layer path, and a fourth ERO sub-object carries a transmission type supported by the server layer path, wherein the fourth ERO sub-object is placed adjacently behind the third ERO sub-object.

8. The data structure according to claim 7, wherein the second ERO sub-object and the fourth ERO sub-object comprise a Type field, a Length field, and a Transmission Type field, wherein:
the Type field is used to identify that the ERO sub-object carries transmission type information;
the Length field is used to indicate the number of bytes occupied by the ERO sub-object; and
the Transmission Type field is used to carry the transmission type supported by the server layer path.

## Patentansprüche

1. Verfahren zum Aufbauen eines Mehrschicht-Pfads, das die folgenden Schritte aufweist:
Senden einer Pfadberechnungs-Anforderungsnachricht an ein Pfadberechnungselement, wobei die Pfadberechnungs-Anforderungsnachricht zum Anfordern einer Berechnung eines Pfads von einem Quellknoten zu einem Zielknoten verwendet wird, wobei sich der Quellknoten und der Zielknoten in einem Clientschicht-Netzwerk befinden (S110, S510);
Empfangen einer durch das Pfadberechnungselement zurückgeschickten Pfadberechnungs-Antwortnachricht, wobei die Pfadberechnungs-Antwortnachricht Informationen eines Pfads, der das Clientschicht-Netzwerk und ein Serverschicht-Netzwerk vom Quellknoten zum Zielknoten durchquert, und einen Übertragungstyp befördert, der durch einen Serverschicht-Pfad auf dem Serverschicht-Netzwerk unterstützt wird (S120,S520);
Aufbauen eines Pfads, der den Serverschicht-Pfad umfasst, vom Quellknoten zum Zielknoten gemäß dem Übertragungstyp (S130, S530);
wobei der Übertragungstyp in "Explicit Route Object"-Subobjekten, ERO-Subobjekten, befördert wird, die in der Pfadberechnungs-Antwortnachricht enthalten sind;
wobei das Verfahren **dadurch gekennzeichnet ist, dass**:
gemäß einer Sequenz zum Parsen der ERO-Subobjekte durch einen Pfadberechnungsclient der Übertragungstyp in einem ERO-Subobjekt befördert wird, das sich angrenzend hinter dem ERO-Subobjekt befindet, das Informationen eines Grenzknotens befördert, und sich der Grenzknoten zwischen dem Clientschicht-Netzwerk und dem Serverschicht-Netzwerk befindet (S524).

2. Verfahren nach Anspruch 1, wobei nach dem Empfangen einer durch das Pfadberechnungselement zurückgeschickten Pfadberechnungs-Antwortnachricht das Verfahren ferner aufweist:
sequentielles Parsen der ERO-Subobjekte, die in der Pfadberechnungs-Antwortnachricht enthalten sind (S522); und
wenn ein erstes geparstes ERO-Subobjekt den Übertragungstyp befördert, Feststellen, dass ein Knoten, der Knoteninformationen entspricht, die in einem zweiten geparsten ERO-Subobjekt befördert werden, das an das erste ERO-Subobjekt angrenzt, ein Grenzknoten zwischen dem Clientschicht-Netzwerk und dem Serverschicht-Netzwerk ist, wobei der Grenzknoten einen Ingress-Knoten und einen Egress-Knoten des Serverschicht-Pfads aufweist.

3. Verfahren nach Anspruch 2, wobei das Feststellen, dass ein Knoten, der Knoteninformationen entspricht, die in einem zweiten geparsten ERO-Subobjekt befördert werden, das an das erste ERO-Subobjekt angrenzt, ein Grenzknoten zwischen dem Clientschicht-Netzwerk und dem Serverschicht-Netzwerk ist, aufweist:
wenn kein ERO-Subobjekt, das den Übertragungstyp befördert, herausgeparst worden ist, bevor das erste ERO-Subobjekt geparst wird, Feststellen, dass das zweite ERO-Subobjekt Informationen des Ingress-Knotens des Serverschicht-Pfads befördert; und
wenn ein ERO-Subobjekt, das den Übertragungstyp befördert, herausgeparst worden ist, bevor das erste ERO-Subobjekt geparst wird, Feststellen, dass das zweite ERO-Subobjekt Informationen des Egress-Knotens des Serverschicht-Pfads befördert.

4. Verfahren zum Aufbauen eines Mehrschicht-Pfads, das die folgenden Schritte aufweist:
Empfangen einer Pfadberechnungs-Anforderungsnachricht von einem Pfadberechnungsclient, wobei die Pfadberechnungs-Anforderungsnachricht zum Anfordern einer Berechnung eines Pfads von einem Quellknoten zu einem Zielknoten verwendet wird, wobei sich der Quellknoten und der Zielknoten in einem Clientschicht-Netzwerk befinden (S610);
Feststellen von Informationen eines Pfads, der das Clientschicht-Netzwerk und ein Serverschicht-Netzwerk vom Quellknoten zum Zielknoten durchquert, und eines Übertragungstyps, der durch einen Serverschicht-Pfad auf dem Serverschicht-Netzwerk unterstützt wird ( S620);
Erzeugen einer Pfadberechnungs-Antwortnachricht, die die Pfadinformationen und den Übertragungstyp befördert (S630);
Senden der Pfadberechnungs-Antwortnachricht an den Pfadberechnungsclient (S640); wobei die Pfadberechnungs-Antwortnachricht durch den Pfadberechnungsclient verwendet wird, um einen Pfad, der den Serverschicht-Pfad umfasst, vom Quellknoten zum Zielknoten gemäß dem Übertragungstyp aufzubauen;
wobei das Erzeugen einer Pfadberechnungs-Antwortnachricht, die die Pfadinformationen und den Übertragungstyp befördert, aufweist:
Befördern des Übertragungstyps in "Explicit Route Object"-Subobjekten, ERO-Subobjekten" die in der Pfadberechnungs-Antwortnachricht enthalten sind;
wobei das Verfahren **dadurch gekennzeichnet ist, dass**:
das Befördern des Übertragungstyps in "Explicit Route Object"-Subobjekten, ERO-Subobjekten" die in der Pfadberechnungs-Antwortnachricht enthalten sind, aufweist: gemäß einer Sequenz zum Parsen der ERO-Subobjekte durch den Pfadberechnungsclient, Befördern des Übertragungstyps in einem ERO-Subobjekt, das sich angrenzend hinter dem ERO-Subobjekt befindet, das Informationen eines Grenzknotens befördert, wobei sich der Grenzknoten zwischen dem Clientschicht-Netzwerk und dem Serverschicht-Netzwerk befindet.

5. Pfadberechnungsclient (700), der Folgendes aufweist:
ein Sendemodul (710), das konfiguriert ist, eine Pfadberechnungs-Anforderungsnachricht an ein Pfadberechnungselement zu senden, wobei die Pfadberechnungs-Anforderungsnachricht zum Anfordern einer Berechnung eines Pfads von einem Quellknoten zu einem Zielknoten verwendet wird, wobei sich der Quellknoten und der Zielknoten in einem Clientschicht-Netzwerk befinden;
ein Empfangsmodul (720), das konfiguriert ist, eine durch das Pfadberechnungselement zurückgeschickte Pfadberechnungs-Antwortnachricht zu empfangen, wobei die Pfadberechnungs-Antwortnachricht Informationen eines Pfads, der das Clientschicht-Netzwerk und ein Serverschicht-Netzwerk vom Quellknoten zum Zielknoten durchquert, und einen Übertragungstyp befördert, der durch einen Serverschicht-Pfad auf dem Serverschicht-Netzwerk unterstützt wird;
ein Aufbaumodul (730), das konfiguriert ist, einen Pfad, der den Serverschicht-Pfad umfasst, vom Quellknoten zum Zielknoten gemäß dem Übertragungstyp aufzubauen;
wobei der Übertragungstyp in "Explicit Route Object"-Subobjekten, ERO-Subobjekten, befördert wird, die in der Pfadberechnungs-Antwortnachricht enthalten sind;
**dadurch gekennzeichnet, dass**:
gemäß einer Sequenz zum Parsen der ERO-Subobjekte durch den Pfadberechnungsclient der Übertragungstyp in einem ERO-Subobjekt befördert wird, das sich angrenzend hinter dem ERO-Subobjekt befindet, das Informationen eines Grenzknotens befördert, wobei sich der Grenzknoten zwischen dem Clientschicht-Netzwerk und dem Serverschicht-Netzwerk befindet.

6. Pfadberechnungselement (900), das Folgendes aufweist:
ein Empfangsmodul (910), das konfiguriert ist, eine Pfadberechnungs-Anforderungsnachricht von einem Pfadberechnungsclient zu empfangen, wobei die Pfadberechnungs-Anforderungsnachricht zum Anfordern einer Berechnung eines Pfads von einem Quellknoten zu einem Zielknoten verwendet wird, wobei sich der Quellknoten und der Zielknoten in einem Clientschicht-Netzwerk befinden;
ein Feststellungsmodul (920), das konfiguriert ist, Informationen eines Pfads, der das Clientschicht-Netzwerk und ein Serverschicht-Netzwerk vom Quellknoten zum Zielknoten durchquert, und einen Übertragungstyp festzustellen, der durch einen Serverschicht-Pfad auf dem Serverschicht-Netzwerk unterstützt wird;
ein Erzeugungsmodul (930), das konfiguriert ist, eine Pfadberechnungs-Antwortnachricht zu erzeugen, die die Pfadinformationen und den Übertragungstyp befördert;
ein Sendemodul (940), das konfiguriert ist, die Pfadberechnungs-Antwortnachricht an den Pfadberechnungsclient zu senden, wobei die Pfadberechnungs-Antwortnachricht durch den Pfadberechnungsclient verwendet wird, um einen Pfad, der den Serverschicht-Pfad umfasst, vom Quellknoten zum Zielknoten gemäß dem Übertragungstyp aufzubauen;
wobei das Erzeugungsmodul konfiguriert ist, den Übertragungstyp in "Explicit Route Object"-Subobjekten, ERO-Subobjekten, zu befördern, die in der Pfadberechnungs-Antwortnachricht enthalten sind;
**dadurch gekennzeichnet, dass**:
gemäß einer Sequenz zum Parsen der ERO-Subobjekte durch den Pfadberechnungsclient der Übertragungstyp in einem ERO-Subobjekt befördert wird, das sich angrenzend hinter dem ERO-Subobjekt befindet, das Informationen eines Grenzknotens befördert, wobei sich der Grenzknoten zwischen dem Clientschicht-Netzwerk und dem Serverschicht-Netzwerk befindet.

7. Datenstruktur eines "Explicit Route Object", ERO, das mehrere ERO-Subobjekte aufweist, wobei gemäß einer Sequenz zum Parsen der ERO-Subobjekte durch einen Pfadberechnungsclient die mehreren ERO-Subobjekte sequentiell Informationen von Knoten auf einem Pfad von einem Quellknoten zu einem Zielknoten befördern, wobei sich der Quellknoten und der Zielknoten in einem Clientschicht-Netzwerk befinden, und der Pfad das Clientschicht-Netzwerk und ein Serverschicht-Netzwerk durchquert, wobei:
ein erstes ERO-Subobjekt Informationen eines Ingress-Knotens eines Serverschicht-Pfads auf dem Serverschicht-Netzwerk befördert, und ein zweites ERO-Subobjekt einen Übertragungstyp befördert, der durch den Serverschicht-Pfad unterstützt wird,
wobei das zweite ERO-Subobjekt angrenzend hinter dem ersten ERO-Subobjekt angeordnet ist; und
ein drittes ERO-Subobjekt Informationen eines Egress-Knotens des Serverschicht-Pfads befördert, und ein viertes ERO-Subobjekt einen Übertragungstyp befördert, der durch den Serverschicht-Pfad unterstützt wird, wobei das vierte ERO-Subobjekt angrenzend hinter dem dritten ERO-Subobjekt angeordnet ist.

8. Datenstruktur nach Anspruch 7, wobei das zweite ERO-Subobjekt und das vierte ERO-Subobjekt ein Typfeld, ein Längenfeld und ein Übertragungstypfeld aufweisen, wobei:
das Typfeld verwendet wird, um zu kennzeichnen, dass das ERO-Subobjekt Übertragungstypinformationen befördert;
das Längenfeld verwendet wird, um die Anzahl der Bytes anzugeben, die durch das ERO-Subobjekt belegt werden; und
das Übertragungstypfeld verwendet wird, um den Übertragungstyp zu befördern, der durch den Serverschicht-Pfad unterstützt wird.

## Revendications

1. Procédé pour établir un trajet multicouche, comprenant les étapes consistant à :
envoyer un message de demande de calcul de trajet à un élément de calcul de trajet, le message de demande de calcul de trajet étant utilisé pour demander le calcul d'un trajet d'un noeud source à un noeud cible, le noeud source et le noeud cible se situant dans un réseau en couche client (S110, S510) ;
recevoir un message de réponse de calcul de trajet renvoyé par l'élément de calcul de trajet, le message de réponse de calcul de trajet acheminant des informations sur un trajet traversant le réseau en couche client et un réseau en couche serveur du noeud source au noeud cible, et un type de transmission pris en charge par un trajet en couche serveur sur le réseau en couche serveur (S120, S520) ;
établir un trajet, comprenant le trajet en couche serveur, du noeud source au noeud cible en fonction du type de transmission (S310, S530) ;
type de transmission étant acheminé dans des sous-objets d'objet de routage explicite, dit ERO, contenus dans le message de réponse de calcul de trajet ;
le procédé étant **caractérisé en ce que** :
en fonction d'une séquence de parsage des sous-objets ERO par un client de calcul de trajet, le type de transmission est acheminé dans un sous-objet ERO immédiatement derrière le sous-objet ERO acheminant des informations sur un noeud frontière, et le noeud frontière se situe entre le réseau en couche client et le réseau en couche serveur (S524).

2. Procédé selon la revendication 1, comprenant en outre, suite à l'étape consistant à recevoir un message de réponse de calcul de trajet renvoyé par l'élément de calcul de trajet, les étapes consistant à :
effectuer un parsage séquentiel des sous-objets ERO contenus dans le message de réponse de calcul de trajet (S522) ; et
si un premier sous-objet ERO parsé achemine le type de transmission, déterminer qu'un noeud correspondant à des informations de noeud acheminées dans un deuxième sous-objet ERO parsé adjacent au premier sous-objet ERO est un noeud frontière entre le réseau en couche client et le réseau en couche serveur, le noeud frontière comprenant un noeud d'entrée et un noeud de sortie du trajet en couche serveur.

3. Procédé selon la revendication 2, dans lequel l'étape consistant à déterminer qu'un noeud correspondant à des informations de noeud acheminées dans un deuxième sous-objet ERO parsé adjacent au premier sous-objet ERO est un noeud frontière entre le réseau en couche client et le réseau en couche serveur comprend les étapes consistant à :
si aucun sous-objet ERO acheminant le type de transmission n'a été extrait par parsage avant le parsage du premier sous-objet ERO, déterminer que le deuxième sous-objet ERO achemine des informations sur le noeud d'entrée du trajet en couche serveur ; et
si un sous-objet ERO acheminant le type de transmission a été extrait par parsage avant le parsage du premier sous-objet ERO, déterminer que le deuxième sous-objet ERO achemine des informations sur le noeud de sortie du trajet en couche serveur.

4. Procédé pour établir un trajet multicouche, comprenant les étapes consistant à :
recevoir un message de demande de calcul de trajet depuis un client de calcul de trajet, le message de demande de calcul de trajet étant utilisé pour demander le calcul d'un trajet d'un noeud source à un noeud cible, le noeud source et le noeud cible se situant dans un réseau en couche client (S610) ;
déterminer des informations sur un trajet traversant le réseau en couche client et un réseau en couche serveur du noeud source au noeud cible, et un type de transmission pris en charge par un trajet en couche serveur sur le réseau en couche serveur (S620) ;
générer un message de réponse de calcul de trajet acheminant les informations sur le trajet et le type de transmission (S630) ;
envoyer le message de réponse de calcul de trajet au client de calcul de trajet (S640) ;
le message de réponse de calcul de trajet étant utilisé par le client de calcul de trajet pour établir un trajet, comprenant le trajet en couche serveur, du noeud source au noeud cible en fonction du type de transmission ;
l'étape consistant à générer un message de réponse de calcul de trajet acheminant les informations sur le trajet et le type de transmission comprenant l'étape consistant à :
acheminer le type de transmission dans des sous-objets d'objet de routage explicite, dit ERO, contenus dans le message de réponse de calcul de trajet ;
le procédé étant **caractérisé en ce que** :
l'étape consistant à acheminer le type de transmission dans des sous-objets d'objet de routage explicite, dit ERO, contenus dans le message de réponse de calcul de trajet comprend l'étape consistant à :
en fonction d'une séquence de parsage des sous-objets ERO par le client de calcul de trajet, acheminer le type de transmission dans un sous-objet ERO immédiatement derrière le sous-objet ERO acheminant des informations sur un noeud frontière, le noeud frontière se situant entre le réseau en couche client et le réseau en couche serveur.

5. Client de calcul de trajet (700), comprenant :
un module d'envoi (710), configuré pour envoyer un message de demande de calcul de trajet à un élément de calcul de trajet, le message de demande de calcul de trajet étant utilisé pour demander le calcul d'un trajet d'un noeud source à un noeud cible, le noeud source et le noeud cible se situant dans un réseau en couche client ;
un module de réception (720), configuré pour recevoir un message de réponse de calcul de trajet renvoyé par l'élément de calcul de trajet, le message de réponse de calcul de trajet acheminant des informations sur un trajet traversant le réseau en couche client et un réseau en couche serveur du noeud source au noeud cible, et un type de transmission pris en charge par un trajet en couche serveur sur le réseau en couche serveur ;
un module d'établissement (730), configuré pour établir un trajet, comprenant le trajet en couche serveur, du noeud source au noeud cible en fonction du type de transmission ;
le type de transmission étant acheminé dans des sous-objets d'objet de routage explicite, dit ERO, contenus dans le message de réponse de calcul de trajet ;
le client de calcul de trajet étant **caractérisé en ce que** :
en fonction d'une séquence de parsage des sous-objets ERO par le client de calcul de trajet, le type de transmission est acheminé dans un sous-objet ERO immédiatement derrière le sous-objet ERO acheminant des informations sur un noeud frontière, le noeud frontière se situant entre le réseau en couche client et le réseau en couche serveur.

6. Elément de calcul de trajet (900), comprenant :
un module de réception (910), configuré pour recevoir un message de demande de calcul de trajet depuis un client de calcul de trajet, le message de demande de calcul de trajet étant utilisé pour demander le calcul d'un trajet d'un noeud source à un noeud cible, le noeud source et le noeud cible se situant dans un réseau en couche client ;
un module de détermination (920), configuré pour déterminer des informations sur un trajet traversant le réseau en couche client et un réseau en couche serveur du noeud source au noeud cible, et un type de transmission pris en charge par un trajet en couche serveur sur le réseau en couche serveur ;
un module de génération (930), configuré pour générer un message de réponse de calcul de trajet acheminant les informations sur le trajet et le type de transmission ;
un module d'envoi (940), configuré pour envoyer le message de réponse de calcul de trajet au client de calcul de trajet, le message de réponse de calcul de trajet étant utilisé par le client de calcul de trajet pour établir un trajet, comprenant le trajet en couche serveur, du noeud source au noeud cible en fonction du type de transmission ;
le module de génération étant configuré pour acheminer le type de transmission dans des sous-objets d'objet de routage explicite, dit ERO, contenus dans le message de réponse de calcul de trajet ;
l'élément de calcul de trajet étant **caractérisé en ce que** :
en fonction d'une séquence de parsage des sous-objets ERO par le client de calcul de trajet, le type de transmission est acheminé dans un sous-objet ERO immédiatement derrière le sous-objet ERO acheminant des informations sur un noeud frontière, le noeud frontière se situant entre le réseau en couche client et le réseau en couche serveur.

7. Structure de données d'un objet de routage explicite, dit ERO, comprenant de multiples sous-objets ERO, dans laquelle, en fonction d'une séquence de parsage des sous-objets ERO par un client de calcul de trajet, les multiples sous-objets ERO acheminement séquentiellement des informations sur des noeuds sur un trajet d'un noeud source à un noeud cible, le noeud source et le noeud cible se situant dans un réseau en couche client, et le trajet traversant le réseau en couche client et un réseau en couche serveur, dans laquelle :
un premier sous-objet ERO achemine des informations sur un noeud d'entrée d'un trajet en couche serveur sur le réseau en couche serveur, et un deuxième sous-objet ERO achemine un type de transmission pris en charge par le trajet en couche serveur,
le deuxième sous-objet ERO étant placé immédiatement derrière le premier sous-objet ERO ; et
un troisième sous-objet ERO achemine des informations sur un noeud de sortie du trajet en couche serveur, et un quatrième sous-objet ERO achemine un type de transmission pris en charge par le trajet en couche serveur, le quatrième sous-objet ERO étant placé immédiatement derrière le troisième sous-objet ERO.

8. Structure de données selon la revendication 7, dans laquelle le deuxième sous-objet ERO et le quatrième sous-objet ERO comprennent un champ Type, un champ Longueur et un champ Type de Transmission,
le champ Type étant utilisé pour indiquer que le sous-objet ERO achemine des informations sur le type de transmission ;
le champ Longueur étant utilisé pour indiquer le nombre d'octets occupés par le sous-objet ERO ; et
le champ Type de Transmission étant utilisé pour acheminer le type de transmission pris en charge par le trajet en couche serveur.
